# EUROPEAN PATENT SPECIFICATION

(11) **EP 3 463 990 B1**
(45) Date of publication and mention of the grant of the patent: **08.07.2020**
(21) Application number: 17737363.6
(22) Date of filing: 23.05.2017
(51) Int. Cl.: B60R 21/06

(54) **PET GUARD TO TRANSPORT PETS IN THE BOOT OF MOTORCARS, PARTICULARLY DOGS**
EIN HAUSTIERSCHUTZ FÜR DEN TRANSPORT EINES HAUSTIERS IN EINEM FAHRZEUGINNENRAUM EINES FAHRZEUGS, INSBESONDERE FÜR HUNDE
PROTECTION POUR ANIMAUX DE COMPAGNIE TRANSPORTÉS DANS LE COFFRE DE VÉHICULES AUTOMOBILES, EN PARTICULIER POUR CHIENS

(30) Priority: 23.05.2016 IT UA20163704
(43) Date of publication of application: 10.04.2019
(73) Proprietor: Camon S.p.A., 37041 Verona (IT)
(72) Inventor: FRACASSI, Cristian, 25020 Bassano Bresciano (IT); MORI, Alvise, 25123 Brescia (IT); CALVI, Cesare, 43123 Parma (IT)
(74) Representative: Autuori, Angelo
(86) International application number: PCT/IB2017/053040
(87) International publication number: WO 2017/203433

(56) References cited:
- DE-A1- 3 800 425
- DE-U1-202010 014 696
- US-A1- 2011 023 788
- US-B1- 6 257 653

## Description

### Field of the invention

The present invention is generally applicable to the technical field of motorcars' accessories, and it particularly relates to a pet guard to transport pets in motorcars, particularly dogs.

### Background of the invention

It is known that to transport pets, particularly dogs, in the boot of motorcars it is necessary to use a pet guard to prevent the pet from entering in the cabin.

Generally, a pet guard includes a separating barrier and means to anchor it to the motorcar. It is evident that for safety reasons the pet guard has to allow the driver to see in the rear-view mirror what happens behind the motorcar.

A known type of pet guard is a simple net that may be connected in various ways to the motorcar.

It is evident that such a type of pet guard tends to wear out over time and may be more or less simply torn by the pet.

In order to overcome such drawbacks, pet guards have been provided having a separating barrier made of metal bars, possibly telescopic, to adapt to the different dimensions of the boot of the various motorcars brands. In such known pet guards, the hooking means generally consist of a bar with hooks suitable to hook the pet guard to the headrests of the rear seats.

Even such known pet guards are not without drawbacks.

In fact, the separating barrier thereof consists of metal bars telescopically coupled therebetween, thus making such known pet guards very noisy during the drive of the motorcar, since the bars vibrate against one another.

The known pet guards are also difficult to assemble, and they always require the use of screwdrivers, hex keys or specific tools.

Moreover, the metal structure of the separating barrier is quite rigid, therefore it may hurt the pet in case of impact of the latter theteto, for example due to an abrupt braking.

Furthermore, there is enough space between a bar and another one for the animal to introduce the snout therein and to come in contact with the occupants of the motocar. Moreover, such a space favors the passage of dirt, fur or saliva of the pet in the cabin.

Furthermore, they are very bulky, and they occupy a significant part of the boot of the motorcar. In fact, in case all the volume of the latter is required, it is necessary to disassemble the pet guard.

In order to overcome such a drawback, pet guards have been provided wherein the separating barrier is movable between an upper working position and a lower rest position by means of rotation around the fastening bar to the headrest.

In this way, when the boot is not occupied by the dog, it is possible to bring the separating barrier to the rest position, avoiding to disassemble the entire pet guard.

However, the above-mentioned rotating movement further greatly restricts the use of the boot, as well as making it almost unusable if not on motorcars with heavily-sized boot. US2011/0023788 A1 discloses a pet guard according to the preamble of claim 1.

### Summary of the invention

Object of the present invention is to at least partially overcome the above mentioned drawbacks, by providing a pet guard to transport pets into the boot of a motorcar having high efficiency and relative economy.

Another object of the present invention is to provide a pet guard that allows the transport of pets in the boot safely.

Another object of the present invention is to provide a simple and cheap pet guard to be manufactured.

Another object of the present invention is to provide a pet guard simple to be mounted in the motorcar.

Another object of the present invention is to provide a long-lasting pet guard over time.

Another object of the present invention is to provide a pet guard that minimizes or eliminates vibrations during the drive of the motorcar.

Another object of the present invention is to provide a pet guard that minimizes the consequences of a possible impact of the animal thereto, for example due to an abrupt braking.

Another object of the present invention is to provide a pet guard that prevents the animal to come in contact with the occupants of the motocar.

Another object of the present invention is to provide a pet guard that avoids the passage in the boot of the dirt, fur or saliva of the animal.

Another object of the present invention is to provide a pet guard having a low bulkiness.

Another object of the present invention is to provide a pet guard that allows the use of substantially all the volume of the boot even when it is mounted.

Such objects, as well as others that will be clearer hereinafter, are fulfilled by a pet guard to transport pets in the boot of a motorcar having one or more of the features herein described, shown and / or claimed.

Advantageous embodiments of the invention are described according to the appended claims.

### Brief description of the drawings

Further features and advantages of the invention will be more evident by reading the detailed description of some preferred but non-exclusive embodiments of the invention shown as not limitative example with the help of the annexed drawings, wherein:

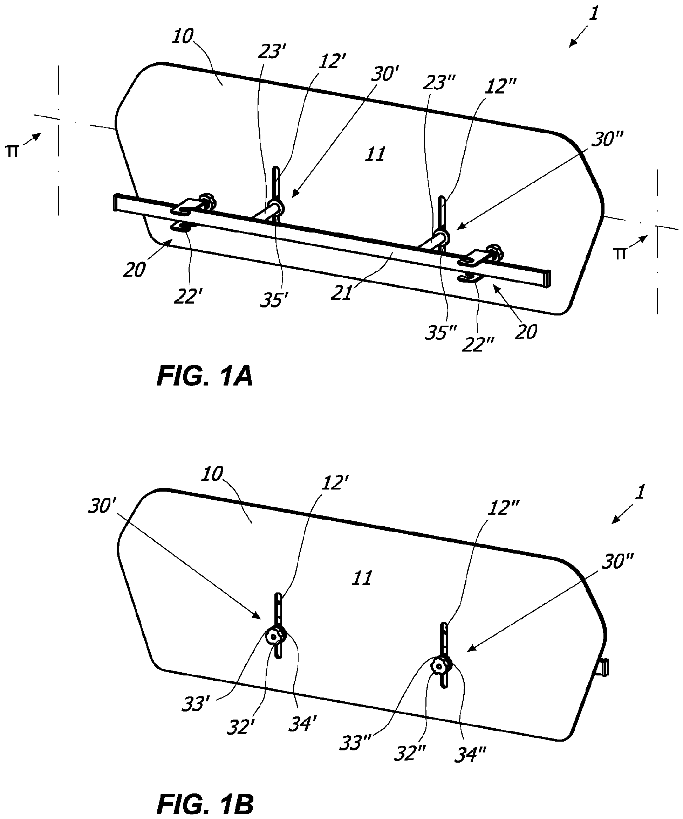

**FIGs. 1A** and **1B** are axonometric views of an embodiment of the pet guard **1;**
**FIGs. 2A** and **2B** are schematic views of the application of the embodiment of the pet guard **1** of FIGs. 1A and 1B in a car **C,** wherein the plate **11** is respectively in the working and in the rest position;
**FIGs. 3A** to **3D** are top views of the embodiment of the pet guard **1** of FIGs. 1A and 1B wherein the plate **11** and the support bar **21** are at different distances **d,** with in **FIG. 3E** some enlarged details of FIG. 3A.

### Detailed description of some preferred embodiments

With reference to the above mentioned figures, it is described a pet guard 1 to transport pets in the boot of a motorcar, in particular for dogs in a car **C.**

Essentially, the pet guard **1** includes a barrier **10** for the reciprocal separation of the boot **B** and the cabin **I** of the motorcar **C** and means **20** to anchor the same barrier to the motorcar **C,** preferably of the removable type.

Suitably, the anchoring means **20** may include a support structure defined by a bar **21** that may be fastened to the motorcar **C,** and in particular to the headrests **H** of the rear seat **S** by means of hooks **22', 22"** of a *per se* known type.

On the other hand, the separation barrier **10** may include or may consist of a substantially continuos optically transparent plate **11** preferably made of polymeric material, such as polycarbonate or PMMA.

In this way, the motorcar driver has no obstruction to the sight and may see behind the motorcar through the plate **11** by means of the rearview mirror.

Therefore, pet transport is accomplished in complete safety.

Since the barrier **10** essentially consists of the sole plate **11,** the pet guard **1** is simple and cheap to be manufactured and to be mounted in the motorcar **C.**

The continuity of the plate **11** makes it totally resistant from the pet, so as the pet guard **1** is long-lasting and maintains the aesthetic appeal thereof substantially unchanged over time.

Moreover, the elasticity of the plate **11** allows the plate thereof to absorb all vibrations induced by the drive of the motorcar, so as the bother for the occupants is minimal if not null.

For the same reason, any possible impact of the animal against the plate **11,** for example due to an abrupt braking, may have minimal or no effect.

Furthermore, the continuity of plate **11** may prevent a user inside the cabin I to access the boot **B** to come in contact with the pet in order to avoid the user's injury thereof, for example, due to an abrupt braking. Such a feature may be particularly relevant when the user is a child.

In this way, the pet guard **1** may be particularly safe both for the pet and for the users inside the cabin **I.**

The plate **11** may substantially occupy all the width of the boot **B** of the motorcar **C,** or, anyway it may be dimensioned so as to prevent the animal from crossing the barrier laterally.

Moreover, the bar **21** may include a pair of elements **23', 23"** to fasten the plate **11** thereto, preferably in a removable manner, so as the latter completely covers the bar **21.**

This prevents the pet from impacting thereto, thus hurting himself.

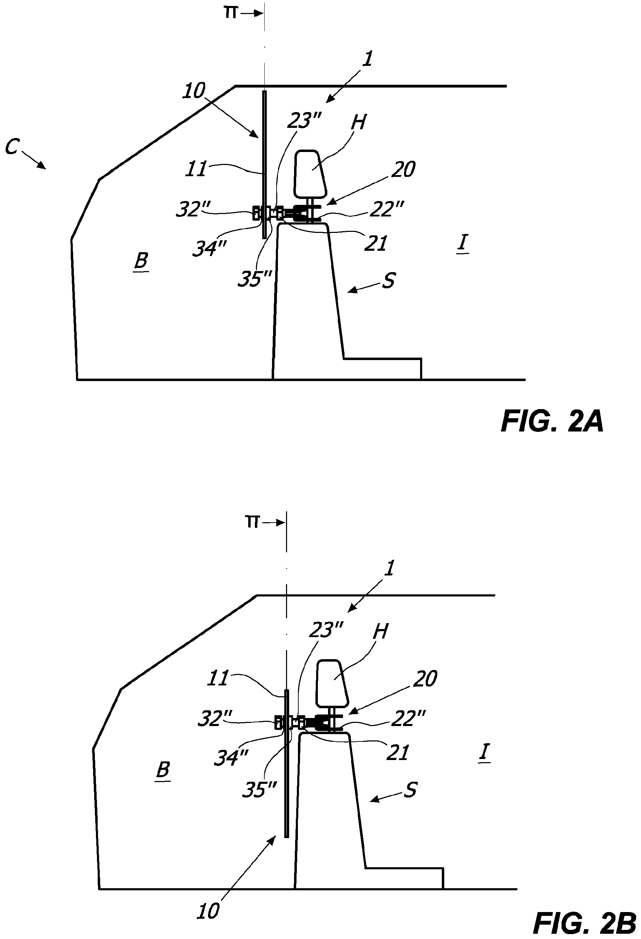

To the object, the plate **11** may include suitable openings wherein the fastening elements **23', 23"** may be inserted. Suitably, such openings may be defined by elongated slots **12', 12",** that may act as guiding means for the movement of the plate **11** between an upper working position, shown in FIG. 2A, and a lower rest position, shown in FIG. 2B.

In this way, the elongated slots **12', 12"** allow the sliding of the plate **11** along the plane **π** defined thereby. Generally, such a plane **π** is substantially perpendicular to the driving direction of the motorcar **C.**

Thanks to such a feature, the bulkiness of the pet guard **1** is minimal, and it allows the maximum volume of the boot **B** even if in the rest position.

Advantageously, such a sliding may be selectively blocked in any position by means of suitable blocking elements **30', 30"** engaging with / disengaging from the fastening elements **23', 23".**

This allows to adjust the height of the working position as desired, for example to leave more or less airing space for the pet.

Suitably, each fastening element **23', 23"** may include a nut screw **24', 24",** while each blocking element **30', 30"** may include a screw **31', 31"** screwable in / unscrewable from the respective nut screw **24', 24"** and a knob **32', 32"** integral with the screw **31', 31"** thereof having a maneuvering portion **33', 33"** that may be grasped by the user to screw / unscrew the latter.

Each blocking element **30', 30"** may also include a first washer **34', 34"** and a second washer **35', 35",** both coaxially inserted into the screw **31', 31"** from opposite sides with respect to the plate **11.**

The first washer **34', 34"** may include an operating portion **36', 36"** faced to the plate **11** to act against it in response to the screwing of the screw **31', 31"** into the nut screw **24', 24".**

The second washer **35', 35"** may abut against the fastening elements **23', 23"** to define a corresponding element for the plate **11.**

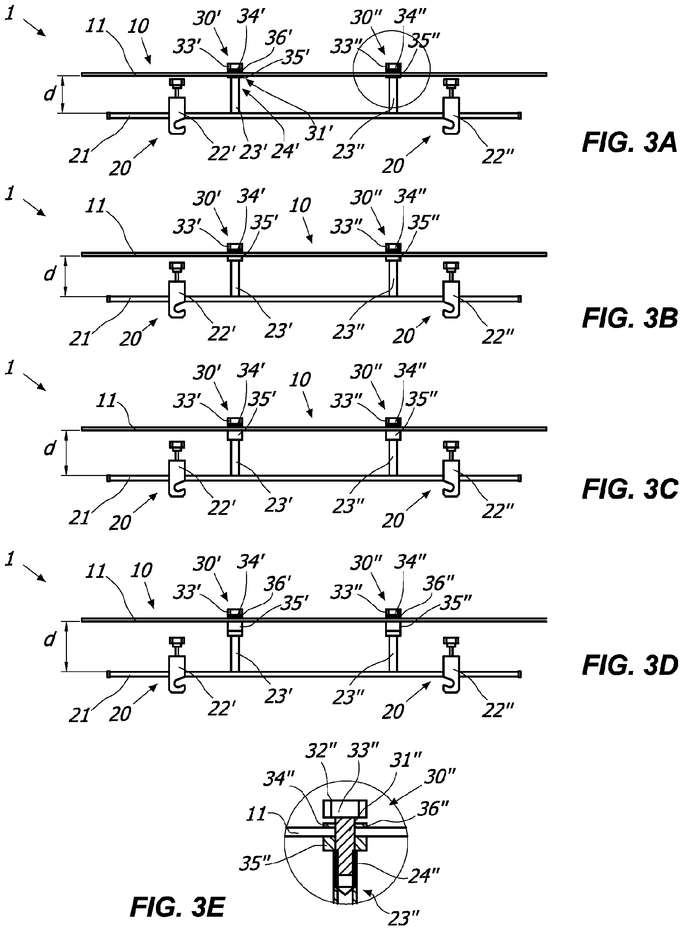

Advantageously, as shown in FIGs. 3A to 3D, for each blocking element **23', 23"** second washers **35', 35"** of various size may be provided. This allows to adjust the reciprocal distance **d** between the plate **11** and the support bar **21** in a quick, easy and cheap way.

Therefore, it is possible to use a single second washer **35', 35"** of different size, as shown in FIGs. 3A, 3B and 3C, or multiple coupled washers, as shown in FIG. 3D.

With reference to the aforementioned, it is understood that the invention fulfils the intended objects.

## Claims

1. A pet guard to transport pets in a boot (**B**) of a motorcar (**C**), the latter having a cabin (**I**) communicating with the boot (**B**), the pet guard comprising:
- a barrier (**10**) for the reciprocal separation of the boot (**B**) and the cabin (**I**) of the motorcar (**C**);
- means (**20**) to removably anchor said separating barrier (**10**) to the motorcar (**C**);
wherein said separating barrier (**10**) includes at least one substantially continuous optically transparent element (**11**) to allow the driver of the motocar to see behind the latter therethrough;
**characterized in that** said optically transparent element (**11**) is a plate, said anchoring means (**20**) comprising a single elongated support bar (**21**) to be removably fastened to the motorcar (**C**) which comprises at least one removable fastening element (2**3', 23**") to removably fasten the plate (**11**) to said support bar (**21**).

2. Pet guard according to claim 1, wherein said continuous plate (**11**) is made of polymeric material, preferably polycarbonate or PMMA.

3. Pet guard according to claim 1 or 2, wherein said separating barrier (**10**) consists of said at least one substantially continuous plate (**11**).

4. Pet guard according to claim 1, 2 or 3, wherein said at least one support bar (**21**) comprises at least one pair of said removable fastening elements (**23', 23**").

5. Pet guard according to the preceding claim, wherein said at least one fastening element, respectively said at least one pair of fastening elements (**23', 23"**), are configured so as said plate (**11**) completely covers said support bar (**21**), so as in case of accidental impact of the pet against the pet guard the pet does not hurt against the support bar (**21**).

6. Pet guard according to any one of the preceding claims, wherein said plate (**11**) defines a plane (**π**), the pet guard further comprising guiding means (**12', 12"**) to move said plate (**11**) between an upper working position and a lower rest position, said guiding means (**12', 12"**) being configured to slidingly move said plate (**11**) along said plane (**π**) or a plane parallel thereto.

7. Pet guard according to the preceding claim, wherein said guiding means include at least one elongated slot, respectively, a pair of elongated slots (**12', 12"**) passing through said plate (**11**) and defining at least one sliding direction lying on said plane (**π**) or on said plane parallel thereto, said at least one fastening element, respectively, said pair of fastening elements (2**3', 23**") being inserted into said at least one elongated slot, respectively said pair of elongated slots (**12', 12"**).

8. Pet guard according to claim 6 or 7, wherein said guiding means further include means (**30', 30"**) for the selective blocking of the sliding of said plate (**11**) in any position along said sliding plane (**π**).

9. Pet guard according to claims 8, wherein said selective blocking means include at least one blocking element, respectively, a pair of blocking elements (**30', 30"**) engageable with / disengageable from said at least one fastening element, respectively, said pair of fastening elements (**23', 23"**), each blocking element including a maneuvering portion (**33', 33"**) that may be grasped by a user and an operating portion (**36', 36"**) faced to the plate (**11**) to act against it in response to the reciprocal engagement of said at least one blocking element, respectively, said pair of blocking elements (**30', 30"**), and said at least one fastening element, respectively, said pair of fastening elements (**23', 23"**), said blocking means further including at least one corresponding element (**35', 35"**) for each fastening element (**23', 23"**) susceptible to abut against the latter to act upon said plate (**11**) on the opposite side of said operating portion (**36', 36"**).

10. Pet guard according to the preceding claim, wherein each fastening element (**23', 23"**) includes a nut screw (**24', 24**"), each blocking element (**30', 30"**) including a screw (**31', 31**") that may be screwed in / unscrewed from said nut screw (**24', 24"**) and a knob (**32', 32**") integral to said screw (**31', 31**") that includes said maneuvering portion (**33', 33"**), each blocking element (**30', 30"**) further including at least one first washer (**34', 34"**) coaxially inserted into said screw (**31', 31"**) that includes said operating portion (**36', 36"**), each fastening element (**23', 23"**) further including at least one second washer (**35', 35"**) also coaxially inserted into said screw (**31', 31"**) to define said at least one corresponding element.

11. Pet guard according to the preceding claim, comprising a plurality of first washers (**34', 34**") and / or second washers (**35', 35"**) of different length, so as to allow a user to adjust the reciprocal distance (**d**) between said plate (**11**) and said support bar (**21**).

## Patentansprüche

1. Haustierschutz für den Transport eines Haustiers in einem Kofferraum (B) eines Fahrzeugs (C), wobei letzteres einen mit dem Kofferraum (B) in Verbindung stehenden Fahrgastraum (I) aufweist, wobei der Haustierschutz umfasst:
eine Barriere (10) für die wechselseitige Trennung des Kofferraums (B) and des Fahrgastraums (I) des Fahrzeugs (C);
Mittel (20) zum lösbaren Verankern der Barriere (10) an dem Fahrzeug (C);
wobei die trennende Barriere (10) wenigstens ein im Wesentlichen kontinuierliches optisch transparentes Element (11) umfasst, damit der Fahrer des Fahrzeugs durch dieses hindurch nach hinten durchsehen kann;
**dadurch gekennzeichnet, dass** das optisch transparente Element (11) eine Platte ist, und die Verankerungsmittel (20) eine einzelne Stützstange (21) umfassen, zum lösbaren Verbinden mit dem Fahrzeug (C), und welche wenigstens ein lösbares Befestigungselement (23', 23") umfassen, um die Platte (11) lösbar mit der Stützstange (21) zu verbinden.

2. Haustierschutz nach Anspruch 1, wobei die kontinuierliche Platte (11) aus einem Polymermaterial besteht, vorzugsweise aus Polycarbonat oder PMMA.

3. Haustierschutz nach Anspruch 1 oder 2, wobei die trennende Barriere (10) aus der wenigstens einen im Wesentlichen kontinuierlichen Platte (11) besteht.

4. Haustierschutz nach Anspruch 1, 2 oder 3, wobei die wenigstens eine Stützstange (21) wenigstens ein Paar der lösbaren Befestigungselement (23', 23") umfasst.

5. Haustierschutz nach dem vorherigen Anspruch, wobei das wenigstens eine Befestigungselement beziehungsweise das wenigstens eine Paar von Befestigungselementen (23', 23") derart ausgebildet sind, dass die Platte (11) die Stützstange (21) vollständig abdeckt, so dass im Falle eines unbeabsichtigten Aufpralls des Haustiers gegen den Haustierschutz sich das Haustier nicht durch die Stützstange (21) verletzt.

6. Haustierschutz nach einem der vorherigen Ansprüche, wobei die Platte (11) eine Ebene (π) definiert, wobei der Haustierschutz ferner Führungsmittel (12', 12") umfasst, um die Platte (11) zwischen einer oberen Arbeitsposition und einer unteren Ruheposition zu bewegen, wobei die Führungsmittel (12', 12") ausgebildet sind, um die Platte (11) entlang der Ebene (π) oder einer Ebene parallel dazu gleitend zu bewegen.

7. Haustierschutz nach dem vorherigen Anspruch, wobei die Führungsmittel wenigstens einen länglichen Schlitz beziehungsweise ein Paar von länglichen Schlitzen (12', 12") umfassen, die durch die Platte verlaufen und wenigstens eine auf der Ebene (π) oder auf der parallelen Ebene dazu liegende Gleitrichtung definieren, wobei das wenigstens eine Befestigungselement beziehungsweise das Paar von Befestigungselementen (23', 23") in dem wenigstens einen länglichen Schlitz beziehungsweise dem Paar von länglichen Schlitzen (12', 12") eingeführt sind.

8. Haustierschutz nach Anspruch 6 oder 7, wobei die Führungsmittel weiterhin Mittel (30', 30") zum selektiven Blockieren des Gleitens der Platte (11) entlang der Gleitebene (π) in einer beliebigen Position umfasst.

9. Haustierschutz nach Anspruch 8, wobei die selektiven Blockierungsmittel wenigstens ein Blockierungselement beziehungsweise ein Paar von Blockierungselementen (30', 30") umfassen, eingreifbar mit / lösbar von dem wenigstens einen Befestigungselement beziehungsweise dem Paar von Befestigungselementen (23', 23"), wobei jedes Blockierungselement einen Manövrierabschnitt (33', 33") umfasst, der von einem Benutzer ergriffen werden kann, und einen Betriebsabschnitt (36', 36") welcher der Platte (11) zugewandt ist, um dagegen zu wirken als Reaktion auf ein gegenseitiges Eingreifen von dem wenigstens einen Blockierungselement beziehungsweise dem Paar von Blockierungselementen (30', 30") und dem wenigstens einen Befestigungselement beziehungsweise dem Paar von Befestigungselementen (23', 23"), wobei die Blockierungsmittel weiterhin wenigstens ein entsprechendes Element (35', 35") für jedes Befestigungselement (23', 23") umfassen, das an letzteren anliegen kann, um auf der den Betriebsabschnitten (36', 36") gegenüberliegenden Seite auf die Platte (11) einzuwirken.

10. Haustierschutz nach dem vorherigen Anspruch, wobei jedes Befestigungselement (23', 23") eine Schraubenmutter (24', 24") umfasst, wobei jedes Blockierungselement (30', 30") eine Schraube (31', 31") umfasst, welche in die/aus der Schraubenmutter (24', 24") geschraubt werden kann und einen Knopf (32', 32") integral mit der Schraube (31', 31 ") der den Manövrierabschnitt (33', 33") umfasst, wobei jedes Blockierungselement (30', 30") weiterhin wenigstens eine erste Unterlegscheibe (34', 34") umfasst, die koaxial in die Schraube (31', 31") eingefügt ist und den Betriebsabschnitt (36', 36") umfasst, wobei jedes Befestigungselement (23', 23") weiterhin wenigstens eine zweite Unterlegscheibe (35', 35") umfasst, ebenfalls koaxial in die Schraube (31', 31") eingeführt ist, um das wenigstens eine entsprechende Element zu definieren.

11. Haustierschutz nach dem vorherigen Anspruch, umfassend mehrere von ersten Unterlegscheiben (34', 34") und/oder zweiten Unterlegscheiben (35', 35") mit unterschiedlichen Längen, um es einem Benutzer zu ermöglichen, den wechselseitigen Abstand (d) zwischen der Platte (11) und der Stützstange (21) einzustellen.

## Revendications

1. Protection pour animaux de compagnie transportés dans un coffre (B) d'un véhicule automobile (C), cette dernière ayant une cabine (I) communiquant avec le coffre (B), la protection comprenant:
- une barrière (10) pour la séparation réciproque du coffre (B) et de la cabine (I) du véhicule automobile (C);
- un moyen (20) pour ancrer de manière amovible ladite barrière de séparation (10) au véhicule automobile (C);
dans laquelle ladite barrière de séparation (10) comprend au moins un élément optiquement transparente sensiblement continue (11) pour permettre au conducteur du véhicule automobile de voir derrière celui-ci à travers lui;
**caractérisée en ce que** ledit élément optiquement transparente (11) est une plaque, ledit moyen d'ancrage (20) comprend une barre de support (21) unique à fixer au véhicule automobile (C) de manière amovible incluant au moins un élément amovible (23', 23") pour fixer la plaque (11) à sa barre de support (21) de manière amovible.

2. Protection selon la revendication 1, dans laquelle ladite plaque continue (11) est en matériau polymère, de préférence en polycarbonate ou en PMMA.

3. Protection selon la revendication 1 ou 2, dans laquelle ladite barrière de séparation (10) est constituée de ladite au moins une plaque sensiblement continue (11).

4. Protection selon la revendication 1, 2, 3, dans laquelle ledit au moins un barre de support (21) comporte au moins une paire desdits éléments amovibles (23', 23").

5. Protection selon la revendication précédente, dans laquelle ledit au moins un élément de fixation, respectivement ladite au moins une paire d'éléments de fixation (23', 23"), sont configurés de manière que ladite plaque (11) recouvre complètement ladite barre de support (21), de sorte qu'en cas de choc accidentel de l'animal contre la protection, l'animal ne se blesse pas contre la barre de support (21).

6. Protection selon l'une quelconque des revendications précédentes, dans laquelle ladite plaque (11) définit un plan (π), la garde pour animaux comprenant en outre un moyen de guidage (12', 12") pour déplacer ladite plaque (11) entre une position de travail supérieure et une position de repos inférieure, ledit moyen de guidage (12', 12") étant configuré pour déplacer de manière coulissante ladite plaque (11) le long dudit plan (π) ou d'un plan parallèle à celle-ci.

7. Protection selon la revendication précédente, dans laquelle ledit moyen de guidage comprend au moins une fente allongée ou une paire de fentes allongées (12', 12") traversant ladite plaque (11) et définissant au moins une direction de coulissement se trouvant sur ladite plan (π) ou sur ledit plan parallèle à celui-ci, ledit au moins un élément de fixation ou ladite paire d'éléments de fixation (23', 23") étant inséré dans ladite au moins une fente allongée ou dans ladite paire de fentes allongées (12', 12").

8. Protection selon la revendication 6 ou 7, dans laquelle ledit moyens de guidage comprend en outre un moyen (30', 30") pour bloquer sélectivement le coulissement de ladite plaque (11) dans n'importe quelle position le long dudit plan de coulissement (π).

9. Protection selon la revendication 8, dans laquelle ledit moyens de blocage sélectif comprend au moins un élément de blocage ou une paire d'éléments de blocage (30', 30") pouvant s'engager avec / se désengager dudit au moins un élément de fixation ou de ladite paire d'éléments de fixation (23', 23"), chaque élément de blocage comprenant une partie de contrôle (33', 33") pouvant être saisie par un utilisateur et une partie d'actionnement (36', 36") face à la plaque (11) pour agir contre lui en réponse à l'engagement réciproque dudit au moins un élément de blocage ou de ladite paire d'éléments de blocage (30', 30") et dudit au moins un élément de fixation ou de ladite paire d'éléments de fixation (23', 23"), ledit moyen de blocage comprenant en outre au moins un élément correspondant (35', 35") pour chaque élément de fixation (23', 23") susceptible de venir en butée contre ce dernier pour agir sur ladite plaque (11) sur le côté opposé de ladite partie d'actionnement (36', 36").

10. Protection selon la revendication précédente, dans laquelle chaque élément de fixation (23', 23") comprend une vis à écrou (24', 24"), chaque élément de blocage (30', 30") comprenant une vis (31', 31") qui peut être vissé / dévissé de ladite vis d'écrou (24', 24") et d'un bouton (32', 32") solidaire de ladite vis (31', 31") qui comprend ladite partie de contrôle (33', 33"), chaque élément de blocage (30', 30") comprenant en outre au moins une première rondelle (34', 34") insérée coaxialement dans ladite vis (31', 31") qui comprend ladite partie d'actionnement (36', 36"), chaque élément de fixation (23', 23") comprenant en outre au moins une deuxième rondelle (35', 35") également insérée coaxialement dans ladite vis (31', 31") pour définir ledit au moins un élément correspondant.

11. Protection selon la revendication précédente, comprenant une pluralité de premières rondelles (34', 34") et / ou de deuxièmes rondelles (35', 35") de longueur différente, de manière à permettre à un utilisateur d'ajuster la distance réciproque (d) entre ladite plaque (11) et ladite barre de support (21).
